# EUROPEAN PATENT SPECIFICATION

(11) **EP 3 770 029 B1**
(45) Date of publication and mention of the grant of the patent: **04.12.2024**
(21) Application number: 19771717.6
(22) Date of filing: 15.03.2019
(51) Int. Cl.: B60S 1/48, B60S 1/50, B60S 1/56

(54) **VEHICLE CLEANER SYSTEM**
FAHRZEUGREINIGERSYSTEM
SYSTÈME D'APPAREIL DE NETTOYAGE DE VÉHICULE

(30) Priority: 19.03.2018 JP 2018051234; 19.03.2018 JP 2018051235
(43) Date of publication of application: 27.01.2021
(73) Proprietor: KOITO MANUFACTURING CO., LTD., Minato-ku Tokyo 108-8711 (JP)
(72) Inventor: SAKAI Masaru, Shizuoka-shi, Shizuoka 424-8764 (JP); SATO Masaaki, Shizuoka-shi, Shizuoka 424-8764 (JP); KAWAMURA Kazuki, Shizuoka-shi, Shizuoka 424-8764 (JP)
(74) Representative: Grünecker Patent- und Rechtsanwälte PartG mbB
(86) International application number: PCT/JP2019/010768
(87) International publication number: WO 2019/181766

(56) References cited:
- EP-A1- 3 584 104
- EP-A1- 3 650 291
- EP-A2- 1 862 362
- WO-A1-2018/017395
- WO-A1-2019/073975
- WO-A1-2020/153081
- DE-A1- 102008 021 382
- JP-A- 2005 075 218
- JP-A- 2008 198 027
- JP-A- 2015 131 616
- JP-A- 2015 131 616
- JP-A- S6 118 543
- JP-U- H0 572 619
- US-A1- 2018 015 907

## Description

### TECHNICAL FIELD

The present disclosure relates to a vehicle cleaner system.

### BACKGROUND ART

A vehicle cleaner that discharges a cleaning liquid to a sensor or the like mounted on a vehicle is known in Patent Literature 1 and the like.

### CITATION LIST

### PATENT LITERATURE

Patent Literature 1: JP-A-2016-187990

### SUMMARY OF INVENTION

### TECHNICAL PROBLEM

In an autonomous driving vehicle capable of executing a manual driving mode and an autonomous driving mode, it is desired to maintain good sensitivity of a sensor relating to the autonomous driving mode. For this reason, a vehicle cleaner capable of cleaning a sensor such as an external sensor in an automatic cleaning mode may be mounted on the autonomous driving vehicle. In such a vehicle cleaner, it is preferable that a cleaning liquid with a remaining amount sufficient for traveling in the autonomous driving mode is stored.

However, when the vehicle cleaner is used in the automatic cleaning mode, it is difficult for a user to acquire information on a consumption amount of the cleaning liquid for the vehicle cleaner. If the external sensor cannot be cleaned due to an insufficient remaining amount of the cleaning liquid and the external sensor is not clean, it is difficult to acquire external information having high reliability and thus it is difficult for a vehicle control unit to execute the autonomous driving mode.

On the other hand, when a remaining amount of a cleaning liquid in a tank decreases in a vehicle cleaner system capable of cleaning a sensor, there is a demand for saving the cleaning liquid while continuing the cleaning for maintaining the sensitivity of the sensor.

Therefore, a first object of the present disclosure is to provide a vehicle cleaner system capable of preventing a remaining amount of a cleaning liquid for a cleaner from becoming insufficient.

Further, a second object of the present disclosure is to provide a vehicle cleaner system capable of saving a cleaning liquid for a cleaner while continuing cleaning of a sensor.

WO-A-2018/017395 shows the preamble of claim 1.

### SOLUTION TO PROBLEM

In order to achieve the first object, a vehicle cleaner system according to one aspect of the present invention is defined in claim 1.

Further, in order to achieve the second object, there is provided a vehicle cleaner system according to one aspect of the present disclosure that is not part of the invention, including:
an external sensor that acquires information on an outside of a vehicle;
a cleaner unit including a cleaner which discharges a cleaning liquid to clean the external sensor;
a tank that stores the cleaning liquid; and
a cleaner control unit that controls the cleaner unit,
in which the cleaner control unit
   operates the cleaner in a first mode when a remaining amount of the cleaning liquid in the tank is greater than a predetermined amount, and
   operates the cleaner in a second mode, in which a discharge amount of the cleaning liquid is less than that in the first mode, when a remaining amount of the cleaning liquid in the tank is equal to or less than the predetermined amount.

### ADVANTAGEOUS EFFECTS OF INVENTION

According to one aspect of the present disclosure, it is possible to provide a vehicle cleaner system capable of preventing a remaining amount of a cleaning liquid for a cleaner from becoming insufficient.

According to one aspect of the present disclosure, it is possible to provide a vehicle cleaner system capable of saving a cleaning liquid for a cleaner while continuing cleaning of a sensor.

### BRIEF DESCRIPTION OF DRAWINGS

Fig. 1 is a top view of a vehicle on which vehicle cleaner systems according to a first embodiment and an illustrative example of the present disclosure are mounted.
Fig. 2 is a block diagram of a vehicle system according to a first embodiment and an illustrative example.
Fig. 3 is a schematic view of a vehicle cleaner system according to a first embodiment and an illustrative example.
Fig. 4 is a block diagram of a main part of a vehicle cleaner system according to a first embodiment and an illustrative example of the present disclosure.
Fig. 5 is a flowchart of a process to be executed by the vehicle cleaner system according to the first embodiment of the present disclosure.
Fig. 6 is a flowchart of a process to be executed by the vehicle cleaner system according to the example of the present disclosure.

### DESCRIPTION OF EMBODIMENTS

### (First Embodiment)

Hereinafter, a first embodiment of the present disclosure will be described with reference to the drawings. For convenience of description, dimensions of members illustrated in the drawings may be different from actual dimensions of the members.

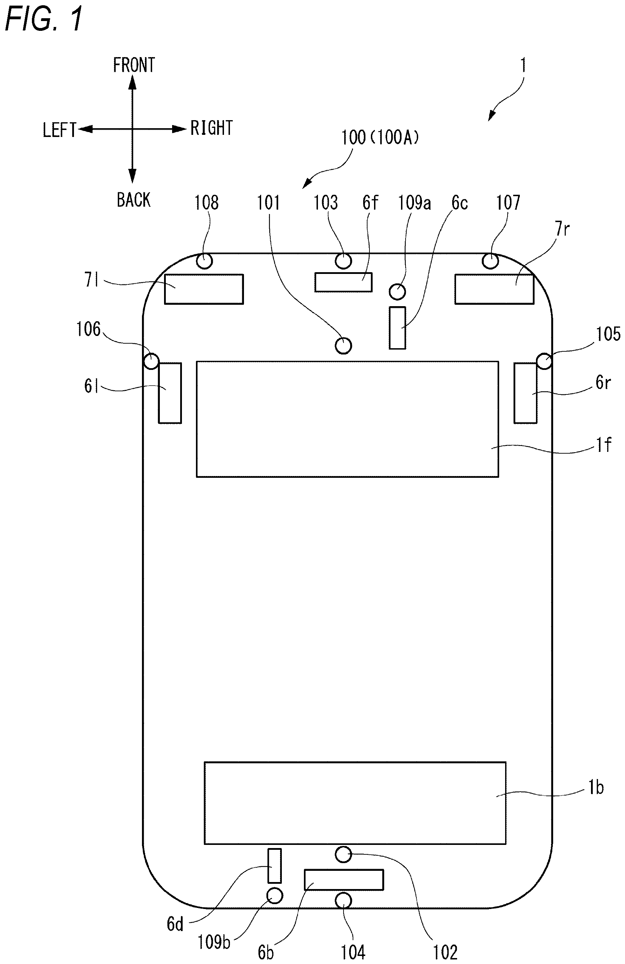

In the description of the present embodiment, a "left-right direction", a "front-rear direction", and an "upper-lower direction" are appropriately referred to, for convenience of description. These directions are relative directions set for a vehicle 1 shown in Fig. 1. Here, the "upper-lower direction" is a direction including an "upper direction" and a "lower direction". The "front-rear direction" is a direction including a "front direction" and a "rear direction". The "left-right direction" is a direction including a "left direction" and a "right direction".

Fig. 1 is a top view of the vehicle 1 on which a vehicle cleaner system 100 (hereinafter, also referred to as a cleaner system 100) according to a first embodiment is mounted. The vehicle 1 includes the cleaner system 100. In the first embodiment, the vehicle 1 is an automobile that can travel in an autonomous driving mode.

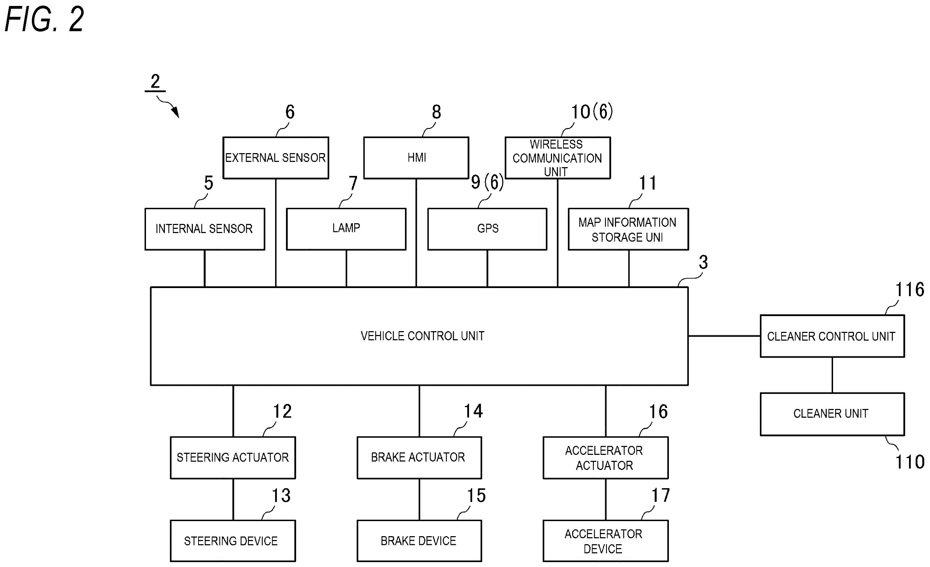

First, a vehicle system 2 of the vehicle 1 will be described with reference to Fig. 2. Fig. 2 shows a block diagram of the vehicle system 2. As shown in Fig. 2, the vehicle system 2 includes a vehicle control unit 3, an internal sensor 5, an external sensor 6, a lamp 7, a human machine interface (HMI) 8, a global positioning system (GPS) 9, a wireless communication unit 10, and a map information storage unit 11. The vehicle system 2 further includes a steering actuator 12, a steering device 13, a brake actuator 14, a brake device 15, an accelerator actuator 16, and an accelerator device 17.

The vehicle control unit 3 is configured with an electronic control unit (ECU). The vehicle control unit 3 is configured with a processor such as a central processing unit (CPU), a read only memory (ROM) in which various kinds of vehicle control programs are stored, and a random access memory (RAM) in which various kinds of vehicle control data is temporarily stored. The processor is configured to load a designated program from the various kinds of vehicle control programs stored in the ROM into the RAM and execute various kinds of processing in cooperation with the RAM. The vehicle control unit 3 is configured to control traveling of the vehicle 1.

The lamp 7 is at least one of a headlamp or a position lamp provided at a front portion of the vehicle 1, a rear combination lamp provided at a rear portion of the vehicle 1, a turn signal lamp provided at the front portion or a side portion of the vehicle, various kinds of lamps for notifying pedestrians and drivers of other vehicles of a status of an own vehicle, and the like.

The HMI 8 includes an input unit that receives an input operation from a user, and an output unit that outputs traveling information or the like to the user. The input unit includes a steering wheel, an accelerator pedal, a brake pedal, a driving mode switching switch that switches a driving mode of the vehicle 1, and the like. The output unit is a display that displays various kinds of traveling information.

The internal sensor 5 is a sensor capable of acquiring information on the own vehicle. The internal sensor 5 is, for example, at least one of an acceleration sensor, a vehicle speed sensor, a wheel speed sensor, and a gyro sensor. The internal sensor 5 is configured to acquire information on the own vehicle including a traveling state of the vehicle 1 and output the information to the vehicle control unit 3.

The internal sensor 5 may include a sensor that detects displacement of the HMI 8, a seating sensor that detects whether the user is sitting on a seat, a face orientation sensor that detects a direction of a face of the user, a human detection sensor that detects whether there is a person in the vehicle, and the like.

The external sensor 6 is a sensor capable of acquiring information on an outside of the own vehicle. The external sensor is, for example, at least one of a camera, a radar, a LiDAR, the GPS 9, the wireless communication unit 10, and the like. The external sensor 6 is configured to acquire information on the outside of the own vehicle including a surrounding environment of the vehicle 1 (other vehicles, pedestrians, road shapes, traffic signs, obstacles, or the like) and output the information to the vehicle control unit 3. Alternatively, the external sensor 6 may include a weather sensor that detects a weather condition, an illuminance sensor that detects illuminance of the surrounding environment of the vehicle 1, and the like.

The camera is, for example, a camera including an image pickup element such as a charge-coupled device (CCD) or a complementary MOS (CMOS). The camera is a camera that detects visible light or an infrared camera that detects infrared rays.

The radar is a millimeter-wave radar, a microwave radar, a laser radar, or the like.

The LiDAR is an abbreviation for light detection and ranging or laser imaging detection and ranging. The LiDAR is a sensor that generally emits non-visible light to a front side and acquires information such as a distance to an object, a shape of the object, a material of the object, and the like based on the emitted light and return light.

The GPS 9, which is one kind of the external sensor 6, is configured to acquire current location information of the vehicle 1 by measuring distances of a plurality of artificial satellites with respect to the vehicle 1 as the own vehicle, and to output the acquired current location information to the vehicle control unit 3. The wireless communication unit 10, which is one kind of the external sensor 6, is configured to receive traveling information of other vehicles around the vehicle 1 from the other vehicles and transmit the traveling information of the vehicle 1 to the other vehicles (inter-vehicle communication). The wireless communication unit 10 is configured to receive infrastructure information from infrastructure equipment such as a traffic light or a marker lamp and transmit the traveling information of the vehicle 1 to the infrastructure equipment (road-to-vehicle communication). The map information storage unit 11 is an external storage device such as a hard disk drive in which map information is stored, and is configured to output the map information to the vehicle control unit 3.

The vehicle control unit 3 is configured to input an output of the internal sensor 5 that detects displacement of an operation element operated by a user such as a steering wheel, an accelerator pedal, and a brake pedal, an output of the internal sensor 5 that detects a state of a vehicle such as a vehicle speed sensor, a wheel speed sensor, an acceleration sensor, a yaw rate sensor, and an output of the external sensor 6 that acquires information on the outside of the vehicle 1. The vehicle control unit 3 is configured to generate a steering control signal, an accelerator control signal, and a brake control signal based on these outputs, and control (process) these signals as necessary.

The steering actuator 12 is configured to receive the steering control signal from the vehicle control unit 3 and control the steering device 13 based on the received steering control signal. The brake actuator 14 is configured to receive the brake control signal from the vehicle control unit 3 and control the brake device 15 based on the received brake control signal. The accelerator actuator 16 is configured to receive the accelerator control signal from the vehicle control unit 3 and control the accelerator device 17 based on the received accelerator control signal.

The vehicle 1 can travel in the autonomous driving mode and a manual driving mode. The vehicle control unit 3 can selectively execute the autonomous driving mode and the manual driving mode.

In the autonomous driving mode, the vehicle control unit 3 automatically generates the steering control signal, the accelerator control signal, and the brake control signal in accordance with the output of the external sensor 6 that acquires the information on the outside of the vehicle 1. The vehicle control unit 3 automatically generates the steering control signal, the accelerator control signal, and the brake control signal in accordance with the output of the external sensor 6, independently of the output of the internal sensor 5 that detects the displacement of the operation element that can be operated by the user.

For example, in the autonomous driving mode, the vehicle control unit 3 automatically generates the steering control signal, the accelerator control signal, and the brake control signal, based on information on surrounding environment of a front side of the vehicle 1 which is acquired by a front camera 6c, the current location information from the GPS 9, the map information stored in the map information storage unit 11, and the like. In the autonomous driving mode, the vehicle 1 is driven independently of the user.

In the manual driving mode, the vehicle control unit 3 normally generates the steering control signal, the accelerator control signal, and the brake control signal independently of the output of the external sensor 6. That is, in the manual driving mode, the vehicle control unit 3 normally generates the steering control signal based on an operation on the steering wheel by the user, independently of the output of the external sensor 6. The vehicle control unit 3 normally generates the accelerator control signal based on an operation on the accelerator pedal by the user, independently of the output of the external sensor 6. The vehicle control unit 3 generates the brake control signal based on an operation on the brake pedal by the user, independently of the output of the external sensor 6. In the manual driving mode, the vehicle 1 is normally driven by the user.

In the manual driving mode, the vehicle control unit 3 may execute anti-lock brake control for controlling the brake control signal in accordance with an output of the wheel speed sensor, which is the internal sensor 5, for example. In addition, in the manual driving mode, the vehicle control unit 3 may execute side-slip prevention control, traction control, or the like, which controls at least one of the steering control signal, the accelerator control signal, and the brake control signal in accordance with outputs of a steering angle sensor, the wheel speed sensor, and the yaw rate sensor, which are the internal sensors 5.

Alternatively, in the manual driving mode, the vehicle control unit 3 may execute precrash control and collision avoidance control for generating the steering control signal and the brake control signal in accordance with the output of the external sensor 6 such as the front camera 6c in an emergency. As described, in the manual driving mode, the vehicle control unit 3 may generate at least one of the steering control signal, the accelerator control signal, and the brake control signal in accordance with the output of the external sensor 6 in an emergency.

In the manual driving mode, a trigger for generating the steering control signal, the accelerator control signal, and the brake control signal is normally the displacement of operation elements including the steering wheel, the accelerator pedal, and the brake pedal that are operated by the user. In the manual driving mode, the vehicle control unit 3 may control (process), in accordance with the output of the internal sensor 5 or the external sensor 6, signals including the steering control signal, the accelerator control signal, and the brake control signal that are normally generated accordingly to the displacement of the operation elements. In the present embodiment, a so-called assist driving mode in which driving of the user is assisted in accordance with the output of the internal sensor 5 or the external sensor 6 is one form of the manual driving mode.

According to the definitions of levels 0 to 5 of the autonomous driving mode currently known as of 2018, the autonomous driving mode of the present embodiment corresponds to levels 3 to 5 (except for an emergency or the like), and the manual driving mode of the present embodiment corresponds to levels 0 to 2.

Referring back to Fig. 1, the vehicle 1 includes, as the external sensor 6, a front LiDAR 6f, a rear LiDAR 6b, a right LiDAR 6r, a left LiDAR 6l, a front camera 6c, and a rear camera 6d. The front LiDAR 6f is configured to acquire information on the front side of the vehicle 1. The rear LiDAR 6b is configured to acquire information on a rear side of the vehicle 1. The right LiDAR 6r is configured to acquire information on a right side of the vehicle 1. The left LiDAR 61 is configured to acquire information on a left side of the vehicle 1. The front camera 6c is configured to acquire information on the front side of the vehicle 1. The rear camera 6d is configured to acquire information on the rear side of the vehicle 1.

Although in the example shown in Fig. 1, the front LiDAR 6f is provided at a front portion of the vehicle 1, the rear LiDAR 6b is provided at a rear portion of the vehicle 1, the right LiDAR 6r is provided at a right portion of the vehicle 1, and the left LiDAR 6l is provided at a left portion of the vehicle 1, the present disclosure is not limited to this example. For example, the front LiDAR, the rear LiDAR, the right LiDAR, and the left LiDAR may be collectively arranged at a ceiling portion of the vehicle 1.

The vehicle 1 includes a right headlamp 7r and a left headlamp 7l as the lamp 7. The right headlamp 7r is provided at a right portion of the front portion of the vehicle 1, and the left headlamp 7l is provided at a left portion of the front portion of the vehicle 1. The right headlamp 7r is provided on a right side of the left headlamp 7l.

The vehicle 1 includes a front window 1f and a rear window 1b.

The vehicle 1 includes the cleaner system 100 according to the embodiment of the present disclosure. The cleaner system 100 is a system that uses a cleaning medium to remove foreign matters such as a water droplet, mud, dust, or the like adhering to an object to be cleaned. In the present embodiment, the cleaner system 100 includes a front window washer (hereinafter, referred to as a front WW) 101, a rear window washer (hereinafter, referred to as a rear WW) 102, a front LiDAR cleaner (hereinafter, referred to as a front LC) 103, and a rear LiDAR cleaner (hereinafter, referred to as a rear LC) 104, a right LiDAR cleaner (hereinafter, referred to as a right LC) 105, a left LiDAR cleaner (hereinafter, referred to as a left LC) 106, a right headlamp cleaner (hereinafter, referred to as a right HC) 107, a left headlamp cleaner (hereinafter, referred to as a left HC) 108, a front camera cleaner 109a, and a rear camera cleaner 109b. Each of the cleaners 101 to 109a and 109b includes one or more nozzles, and discharges a cleaning medium such as a cleaning liquid or air from the nozzle toward the object to be cleaned. Each of the cleaners 101 to 109a and 109b may be referred to as a cleaner unit 110. The front LC 103, the rear LC 104, the right LC 105, the left LC 106, the front camera cleaner 109a, and the rear camera cleaner 109b may be referred to as sensor cleaners.

The front WW 101 can clean the front window 1f. The rear WW 102 can clean the rear window 1b. The front LC 103 can clean the front LiDAR 6f. The rear LC 104 can clean the rear LiDAR 6b. The right LC 105 can clean the right LiDAR 6r. The left LC 106 can clean the left LiDAR 6l. The right HC 107 can clean the right headlamp 7r. The left HC 108 can clean the left headlamp 7l. The front camera cleaner 109a can clean the front camera 6c. The rear camera cleaner 109b can clean the rear camera 6d.

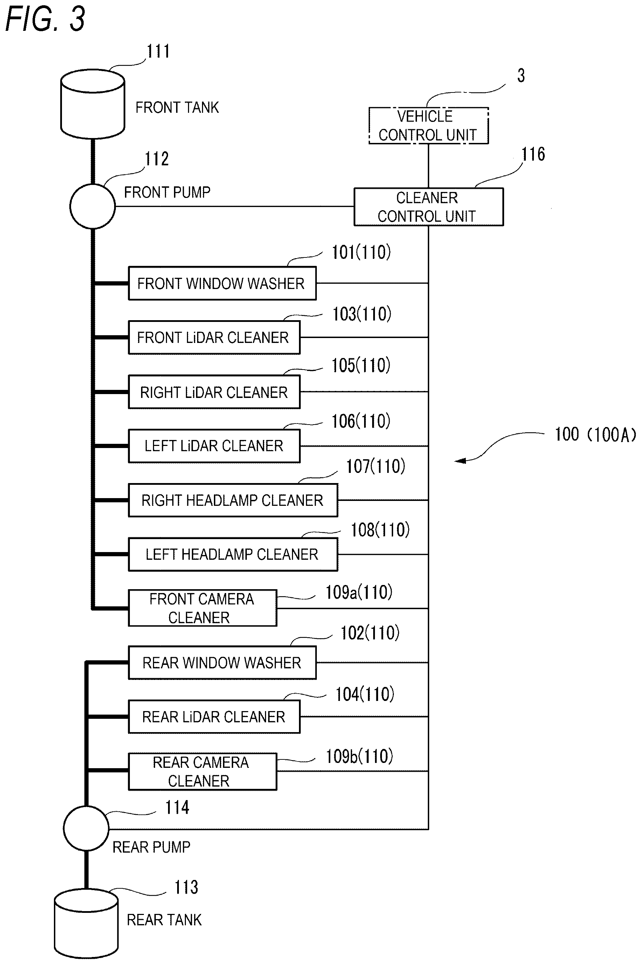

Fig. 3 is a schematic view of the cleaner system 100. In addition to the cleaners 101 to 109a and 109b, the cleaner system 100 includes a front tank 111, a front pump 112, a rear tank 113, a rear pump 114, and a cleaner control unit 116. Hereinafter, the front tank 111 and the rear tank 113 may be referred to as tanks.

The cleaner control unit 116 is configured to actuate the sensor cleaners 103 to 106, 109a, and 109b in an automatic cleaning mode. The automatic cleaning mode is a mode in which the sensor cleaners 103 to 106, 109a, and 109b are actuated independently of a signal output from a cleaner switch (not shown) that outputs a signal in response to an operation of the user.

The front tank 111 supplies a cleaning liquid in the front tank 111 to the front WW 101, the front LC 103, the right LC 105, the left LC 106, the right HC 107, the left HC 108, and the front camera cleaner 109a. The rear tank 113 supplies a cleaning liquid in the rear tank 113 to the rear WW 102, the rear LC 104, and the rear camera cleaner 109b.

The front WW 101, the front LC 103, the right LC 105, the left LC 106, the right HC 107, the left HC 108, and the front camera cleaner 109a are connected to the front tank 111 via the front pump 112. The front pump 112 sends the cleaning liquid stored in the front tank 111 to the front WW 101, the front LC 103, the right LC 105, the left LC 106, the right HC 107, the left HC 108, and the front camera cleaner 109a.

The rear WW 102, the rear LC 104, and the rear camera cleaner 109b are connected to the rear tank 113 via the rear pump 114. The rear pump 114 sends the cleaning liquid stored in the rear tank 113 to the rear WW 102, the rear LC 104, and the rear camera cleaner 109b.

Each of the cleaners 101 to 109a and 109b is provided with an actuator that opens the nozzle to discharge the cleaning liquid to the object to be cleaned. The actuators provided in the cleaners 101 to 109a and 109b are electrically connected to the cleaner control unit 116. In addition, the cleaner control unit 116 is also electrically connected to the front pump 112, the rear pump 114, and the vehicle control unit 3.

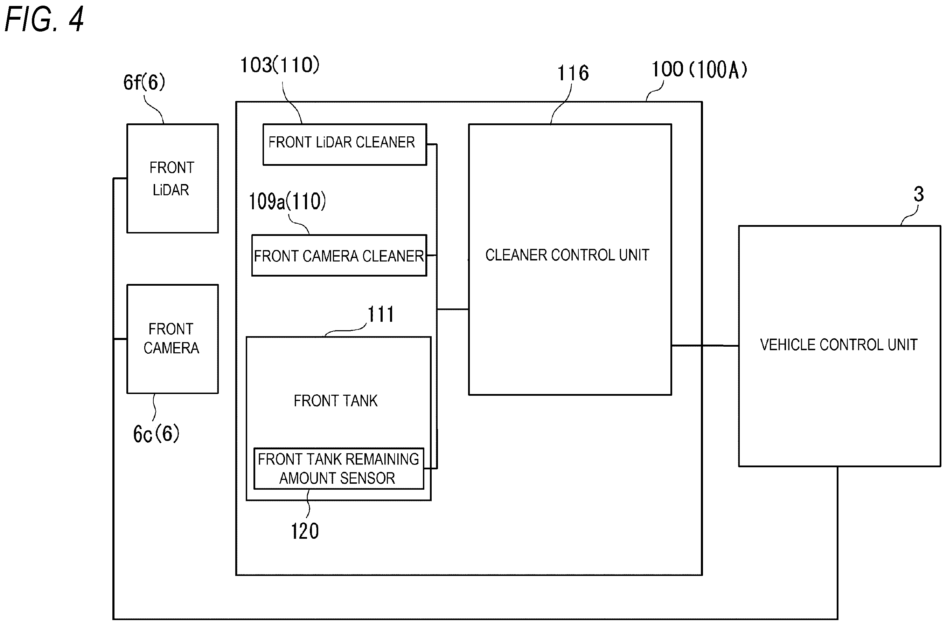

Fig. 4 is a block diagram of a main part of the cleaner system 100. As shown in Fig. 4, the cleaner system 100 includes the cleaner units 110 that clean the external sensor 6, and the cleaner control unit 116 that controls operations of the cleaner units 110. Although only the front LC 103 and the front camera cleaner 109a are shown as the cleaner units 110 in Fig. 4, it is needless to say that the cleaner system 100 includes the other cleaner units 110 as shown in Fig. 3.

The cleaner control unit 116 is configured to control each cleaner unit 110. The cleaner control unit 116 is configured with, for example, at least one electronic control unit (ECU). The electronic control unit may include at least one microcontroller including one or more processors and one or more memories, and another electronic circuit including an active element such as a transistor and a passive element. The processor is, for example, a central processing unit (CPU), a micro processing unit (MPU), and/or a graphics processing unit (GPU). The CPU may be configured with a plurality of CPU cores. The GPU may be configured with a plurality of GPU cores. The memory includes a read only memory (ROM) and a random access memory (RAM). A control program for the cleaner unit 110 may be stored in the ROM.

The processor may be configured to load a program designated from a program group stored in the ROM into the RAM and execute various kinds of processing in cooperation with the RAM. The electronic control unit (ECU) may be configured with an integrated circuit (hardware resource) such as an application specific integrated circuit (ASIC) or a field-programmable gate array (FPGA). Further, the electronic control unit may be configured with a combination of at least one microcontroller and an integrated circuit.

In the present embodiment, the vehicle cleaner system 100 includes a dirt sensor (not shown) capable of detecting whether the external sensor 6 is clean. The dirt sensor is configured to determine that the external sensor 6 is dirty when, for example, the sensitivity of the external sensor 6 is lower than a predetermined threshold, and transmit a dirt signal to the cleaner control unit 116. The dirt sensor may be a sensor provided separately from the external sensor 6, or may be a sensor that also serves as the external sensor 6 having a function of determining that the external sensor 6 is dirty.

In order to maintain the sensitivity of the external sensor 6, there is a demand for obtaining information on a remaining amount of the cleaning liquid of the vehicle cleaner system 100. In particular, in a case where the sensor cleaners 103 to 106, 109a, and 109b are operating in the automatic cleaning mode, it is difficult to acquire information on how much the cleaning liquid has been consumed. Further, in the vehicle 1 traveling in the autonomous driving mode, since good sensitivity of the external sensor 6 is required to be maintained, an operation frequency of the sensor cleaners 103 to 106, 109a, and 109b is greater than an operation frequency of the front WW 101 and the rear WW 102, and a consumption amount of the cleaning liquid in the tank of the sensor cleaners 103 to 106, 109a, and 109b increases. In order to enable the vehicle control unit 3 to execute the autonomous driving mode based on external information having high reliability, it is necessary to prevent a state where the external sensor cannot be cleaned due to remaining amount insufficiency of the cleaning liquid, and thus it is necessary to know that the remaining amount of the cleaning liquid will be insufficient in the near future, particularly in the autonomous driving mode.

Therefore, the vehicle cleaner system 100 of the present embodiment includes a configuration that notifies the user that the remaining amount of the cleaning liquid for the cleaner will be insufficient in the near future.

The cleaner system 100 includes a remaining amount sensor as a configuration that acquires information on the remaining amount of the cleaning liquid. As shown in Fig. 4, the cleaner system 100 includes, as the remaining amount sensor, a front tank remaining amount sensor 120 that detects a remaining amount of the cleaning liquid in the front tank 111 and a rear tank remaining amount sensor (not shown) that detects a remaining amount of the cleaning liquid in the rear tank 113. The front tank remaining amount sensor 120 and the rear tank remaining amount sensor are electrically connected to the cleaner control unit 116, respectively, and output information on the detected remaining amount of the cleaning liquid to the cleaner control unit 116.

Since the front tank remaining amount sensor 120 and the rear tank remaining amount sensor have the same configuration, the front tank remaining amount sensor 120 will be described below, and a description of the rear tank remaining amount sensor will be omitted.

The front tank remaining amount sensor 120 is provided inside the front tank 111. In this example, the front tank remaining amount sensor 120 detects an absolute amount of the cleaning liquid in the front tank 111. The remaining amount of the cleaning liquid in the front tank 111 is detected, for example, by detecting a liquid level of the cleaning liquid in the front tank 111 and specifying the absolute amount (for example, 100 ml) of the remaining amount of the cleaning liquid based on a detection result of the liquid level.

Note that the front tank remaining amount sensor 120 may be a sensor that detects a relative amount of the cleaning liquid in the front tank 111. The relative amount of the cleaning liquid is, for example, a ratio of the remaining amount of the cleaning liquid to a full capacity of the front tank 111, and is 5% in a case where the remaining amount of the cleaning liquid is 100 ml with a full capacity of 2000 ml.

The cleaner system 100 is configured to notify the vehicle control unit 3 that the remaining amount of the cleaning liquid is reduced. Specifically, in a case where the cleaning liquid in the tank is equal to or less than a predetermined amount, the cleaner control unit 116 determines that the remaining amount of the cleaning liquid will be insufficient in the near future and generates a remaining amount insufficiency prediction signal, and outputs the remaining amount insufficiency prediction signal to the vehicle control unit 3.

Here, the predetermined amount is determined based on at least one of the absolute amount of the cleaning liquid in the tank, the ratio of the remaining amount of the cleaning liquid to the full capacity of the tank, number of times of operation of the cleaners, a remaining time period the remaining cleaning liquid can sustain the cleaning which is specified based on consumption prediction of the cleaning liquid, and a remaining amount of the cleaning liquid possible to be used for a scheduled travel distance or scheduled travel time period.

The predetermined amount determined based on the absolute amount of the cleaning liquid in the tank is, for example, a liquid amount of 100 ml. The predetermined amount determined based on the ratio of the remaining amount of the cleaning liquid to the full capacity of the tank is, for example, 10% of the full capacity of the tank.

When the predetermined amount is determined based on the number of times of operation of the cleaners, the remaining amount of the cleaning liquid may be estimated by the cleaner control unit 116 without using a separate sensor such as the front tank remaining amount sensor 120. For example, the cleaner control unit 116 may estimate the remaining amount of the cleaning liquid in the tank based on the number of times of operation of the cleaners 101 to 109a and 109b. The predetermined amount determined based on the number of times of operation of the cleaners 101 to 109a and 109b is, for example, number of times of possible operation (for example, 2000 counts) which is estimated by subtracting actual number of times of operation of the cleaners 101 to 109a and 109b from a total number of times of operation of the cleaners with respect to the full capacity of the front tank 111 which is stored in advance in the cleaner control unit 116.

The predetermined amount may be determined by the cleaner control unit 116 based on the consumption prediction of the cleaning liquid. The consumption prediction of the cleaning liquid may be determined using information on consumption amount of the cleaning liquid in the past and information on scheduled travel in the future.

For example, the information on consumption amount of the cleaning liquid in the past is that a consumption amount of the cleaning liquid in the past 10 hours is 100 ml, that a consumption amount of the cleaning liquid in the past one month is 100 ml, or that a consumption amount of the cleaning liquid consumed in past travelling of 100 km is 100 ml. For example, in a case where the consumption amount of the cleaning liquid in the past 10 hours is 100 ml and the remaining amount of the cleaning liquid in the front tank 111 is 200 ml, the remaining time period the remaining cleaning liquid can sustain the cleaning which is specified based on the consumption prediction of the cleaning liquid, is 20 hours.

The information on scheduled travel in the future may be determined based on information set by the user in a car navigation system. The information on scheduled travel in the future is, for example, a scheduled travel distance to a destination in the car navigation system (for example, 200 km), and a scheduled travel time period to the destination (for example, 2 hours 30 minutes). For example, in a case where information on the consumption amount of the cleaning liquid in past travelling of 100 km is 100 ml and the scheduled travel distance designated by the car navigation system is 200 km, the remaining amount of the cleaning liquid possible to be used with respect to the scheduled travel distance is 200 ml.

The vehicle control unit 3 that has acquired the remaining amount insufficiency prediction signal from the cleaner control unit 116 notifies the user that the remaining amount of the cleaning liquid will be insufficient in the near future. The notification that the remaining amount of the cleaning liquid will be insufficient in the near future may be, for example, turning-on of a warning lamp, and characters or sounds such as "The cleaning liquid is insufficient with respect to the scheduled travel distance". The warning lamp and the character information may be displayed on, for example, a monitor (not shown) provided in the vehicle.

In a case where the vehicle 1 is executing the autonomous driving mode, the vehicle control unit 3 that has acquired the remaining amount insufficiency prediction signal notifies the user of release of the autonomous driving mode. In a case where the vehicle 1 is not executing the autonomous driving mode, the vehicle control unit 3 that has acquired the remaining amount insufficiency prediction signal notifies the user that the autonomous driving mode cannot be executed. Similarly to the notification that the remaining amount of the cleaning liquid will be insufficient in the near future, the notification to the user can be realized by sounds of "The cleaning liquid is insufficient. Please release the autonomous driving mode", a warning buzzer, turning-on of a lamp, a character display indicating release of the autonomous driving mode, or the like.

After the vehicle control unit 3 notifies the user of releasing the autonomous driving mode, the autonomous driving mode is released and the vehicle 1 is switched to the manual driving mode by the user. As described, since the notification of releasing the autonomous driving mode is performed before the autonomous driving mode is released, the vehicle 1 is appropriately handed over to the user for manual driving and the traveling is continued.

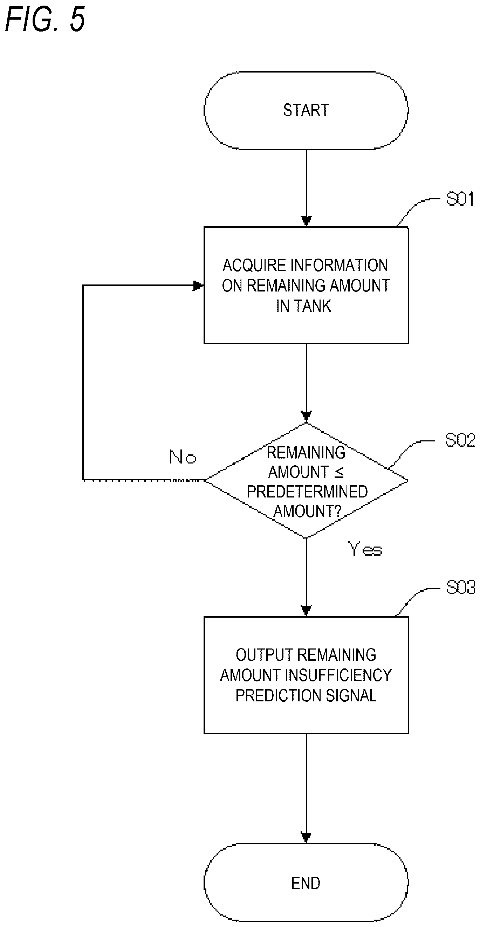

Fig. 5 is a flowchart of a process to be executed by the cleaner control unit 116. As shown in Fig. 5, the cleaner control unit 116 acquires information on the remaining amount of the cleaning liquid in the tank (step S01). For example, the cleaner control unit 116 acquires information indicating that the absolute amount of the remaining amount of the cleaning liquid in the front tank 111 is 100 ml, from the front tank remaining amount sensor 120 provided in the front tank 111.

Next, the cleaner control unit 116 compares information on the predetermined amount with the acquired remaining amount of the cleaning liquid. For example, in a case where the predetermined amount is 50 ml, the cleaner control unit 116 compares the acquired absolute amount 100 ml of the cleaning liquid with the predetermined amount of 50 ml. In this case, since the acquired remaining amount of the cleaning liquid is greater than the predetermined amount (step S02: No), the cleaner control unit 116 returns to step S01 and acquires the remaining amount of the cleaning liquid in the tank.

On the other hand, in a case where the predetermined amount is, for example, 200 ml, the cleaner control unit 116 compares the acquired remaining amount of the cleaning liquid 100 ml with the predetermined amount of 200 ml. Since the remaining amount of the cleaning liquid acquired by the cleaner control unit 116 is equal to or less than the predetermined amount (step S02: Yes), the cleaner control unit 116 determines that the remaining amount of the cleaning liquid in the front tank 111 will be insufficient in the near future. The cleaner control unit 116, which determines that the remaining amount of the cleaning liquid will be insufficient in the near future, generates a remaining amount insufficiency prediction signal. The cleaner control unit 116 outputs the remaining amount insufficiency prediction signal to the vehicle control unit 3 (step S03).

As described above, according to the vehicle cleaner system 100 of the present embodiment, the cleaner control unit 116 is configured to output the remaining amount insufficiency prediction signal to the vehicle control unit 3 when the cleaning liquid in the tank is equal to or less than the predetermined amount. Therefore, it is possible to notify the user that the remaining amount of the cleaning liquid for operating the cleaners 103 to 106, 109a, and 109b will be insufficient in the near future.

That is, if the external sensor 6 is not clean because the external sensor 6 cannot be cleaned due to insufficient remaining amount of the cleaning liquid, it is difficult to acquire external information having high reliability and thus it is difficult for the vehicle control unit 3 to execute the autonomous driving mode. Differently from the case of the vehicle cleaner system 100 according to the present embodiment, in a vehicle having a configuration in which there is no output of the remaining amount insufficiency prediction signal, the user must determine the remaining amount of the cleaning liquid for the cleaners. In this case, it is difficult for the user to know that the remaining amount of the cleaning liquid for the cleaners will be insufficient in the near future.

In contrast, according to the vehicle cleaner system 100 of the present embodiment, since the remaining amount insufficiency prediction signal is output when the cleaning liquid is equal to or less than the predetermined amount, it is possible to know that the remaining amount of the cleaning liquid of the cleaners 103 to 106, 109a, and 109b will be insufficient in the near future. As described, since it is possible to reliably recognize that the cleaning liquid for maintaining the external sensor 6 to be clean will be insufficient in the near future, it is possible to travel in a state where the remaining amount of the cleaning liquid is ensured, for example, travelling after replenishing the insufficient cleaning liquid. Accordingly, it is possible to prevent the remaining amount of the cleaning liquid for the cleaners from becoming insufficient.

Further, according to the vehicle cleaner system 100 of the present embodiment, the predetermined amount as a criterion for determining that the remaining amount of the cleaning liquid will be insufficient in the near future is determined based on at least one of the absolute amount of the cleaning liquid in the tank, the ratio of the remaining amount of the cleaning liquid with respect to the full capacity of the tank, the number of times of operation of the cleaners, the remaining time period the remaining cleaning liquid can sustain the cleaning which is specified based on consumption prediction of the cleaning liquid, and the remaining amount of the cleaning liquid possible to be used for a scheduled travel distance or scheduled travel time period. Therefore, the remaining amount of the cleaning liquid in the tank can be appropriately specified to determine whether the remaining amount of the cleaning liquid for the cleaners will be insufficient in the near future.

Further, according to the vehicle cleaner system 100 of the present embodiment, since the front tank remaining amount sensor 120 and the rear tank remaining amount sensor are provided which detect the remaining amount of the cleaning liquid in the tank, the remaining amount of the cleaning liquid in the front tank 111 or rear tank 113 can be directly detected and information on the remaining amount of the cleaning liquid can be acquired. By using the information on the remaining amount thus acquired, it is possible to determine whether the remaining amount of the cleaning liquid for the cleaners will be insufficient in the near future.

Further, according to the vehicle cleaner system 100 of the present embodiment, the cleaner control unit 116 is configured to output the remaining amount insufficiency prediction signal to the vehicle control unit 3, and cause the vehicle control unit 3 to switch from the autonomous driving mode to the manual driving mode. Therefore, the autonomous driving mode is prevented from being executed in a state where the remaining amount of the cleaning liquid is insufficient and the external sensor 6 cannot be maintained clean.

### (Illustrative Example not part of the invention)

Next, a vehicle cleaner system 100A according to an illustrative example of the present disclosure will be described with reference to Figs. 1 to 4 and Fig. 6. Components of the vehicle cleaner system 100A according to the example, which have substantially the same configuration and function as the components of the vehicle cleaner system 100 according to the first embodiment, are denoted by the same reference numerals as in the first embodiment, and a repetitive description thereof will be omitted.

There is a demand for saving a cleaning liquid in a case where a remaining amount of the cleaning liquid in a tank is small in the vehicle cleaner system 100A. In particular, in order to enable the vehicle control unit 3 to execute an autonomous driving mode based on external information having high reliability, it is required to maintain good sensitivity of the external sensor 6. In order to maintain the sensitivity of the external sensor 6, there is a demand for adjusting a discharge amount of the cleaning liquid in accordance with the remaining amount of the cleaning liquid in the case where the remaining amount of the cleaning liquid is small.

Therefore, the vehicle cleaner system 100A of the example has a configuration that acquires the remaining amount of the cleaning liquid in the tank and a configuration that can adjust the discharge amount of the cleaning liquid in accordance with the remaining amount of the cleaning liquid.

The cleaner system 100A operates the cleaners 101 to 109a and 109b according to the remaining amount of the cleaning liquid in the tank. Specifically, when the remaining amount of the cleaning liquid in the tank is greater than a predetermined amount, the cleaner control unit 116 operates the cleaners 101 to 109a and 109b in a first mode, and when the remaining amount of the cleaning liquid in the tank is equal to or less than the predetermined amount, the cleaner control unit 116 operates the cleaners 101 to 109a and 109b in a second mode in which the discharge amount of the cleaning liquid is less than that in the first mode.

Similarly to the predetermined amount for the remaining amount of the cleaning liquid in the first embodiment, the predetermined amount is determined based on at least one of an absolute amount of the cleaning liquid in the tank, a ratio of the remaining amount of the cleaning liquid to a full capacity of the tank, number of times of operation of the cleaners 101 to 109a and 109b, a remaining time period the remaining cleaning liquid can sustain the cleaning which is specified based on consumption prediction of the cleaning liquid, and a remaining amount of the cleaning liquid possible to be used with respect to a scheduled travel distance or scheduled travel time period.

The first mode is a mode that is employed when the remaining amount of the cleaning liquid is greater than the predetermined amount. In the first mode, the cleaner control unit 116 discharges the cleaning liquid at a normal discharge amount of the vehicle cleaner system 100A to clean the external sensor 6. For example, in the first mode, the cleaner control unit 116 operates the cleaners 101 to 109a and 109b so that the cleaning liquid is discharged 3 ml per cleaning.

The second mode is a mode that is employed when the remaining amount of the cleaning liquid is equal to or less than the predetermined amount. When the remaining amount of the cleaning liquid is equal to or less than the predetermined amount, the discharge amount of the cleaning liquid is desired to be reduced in order to ensure a remaining amount of the cleaning liquid for continuously cleaning the external sensor 6. In the second mode, the cleaner control unit 116 operates the cleaners 101 to 109a and 109b with a discharge amount less than the discharge amount of the cleaning liquid in the first mode. For example, in the case where the discharge amount of the cleaning liquid in the first mode is 3 ml per cleaning, the discharge amount of the cleaning liquid in the second mode is 1 ml per cleaning.

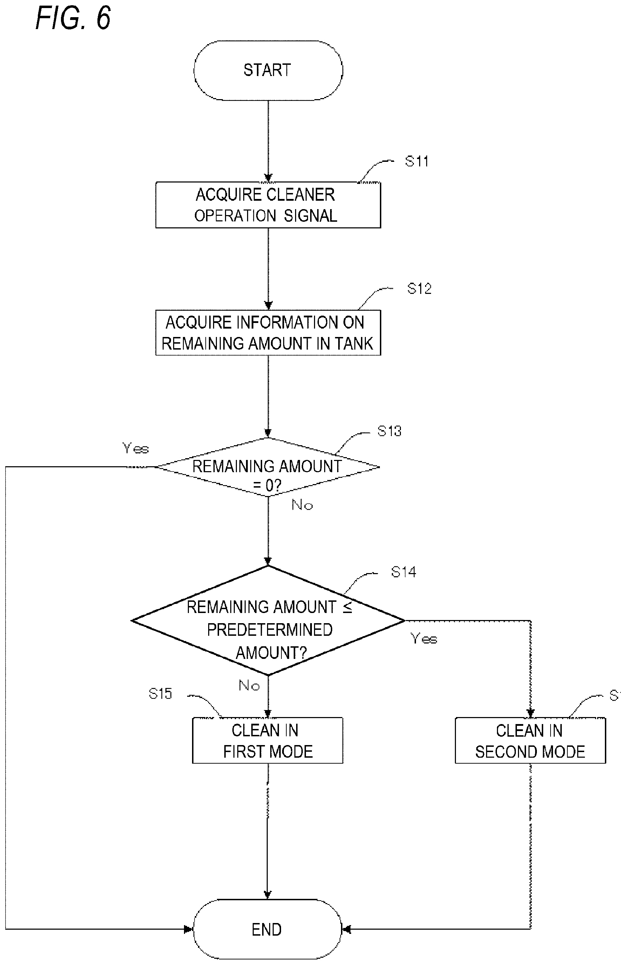

Fig. 6 is a flowchart of a process to be executed by the cleaner control unit 116. As shown in Fig. 6, the cleaner control unit 116 acquires a cleaner operation signal from the vehicle control unit 3 or from an operation of the user (step S11). For example, during execution of an automatic cleaning mode, the cleaner control unit 116 acquires the cleaner operation signal for cleaning the external sensor 6 from the vehicle control unit 3.

Next, the cleaner control unit 116 acquires information on the remaining amount of the cleaning liquid in the tank (step S12). For example, the cleaner control unit 116 acquires information indicating that the absolute amount of the remaining amount of the cleaning liquid in the front tank 111 is 100 ml, from the front tank remaining amount sensor 120 provided in the front tank 111. The cleaner control unit 116 may calculate and estimate the remaining amount in the front tank 111 based on the number of times of operation of the cleaners 101 to 109a and 109b without using the front tank remaining amount sensor 120.

Next, the cleaner control unit 116 determines whether the remaining amount of the cleaning liquid in the front tank 111 is equal to 0 (step S13).

If the remaining amount of the cleaning liquid in the front tank 111 is 0 (step S13: Yes), the cleaner control unit 116 does not perform cleaning with the cleaning liquid. In this case, air is discharged from the cleaners 103 to 109a and 109b to clean the external sensor 6.

If the remaining amount of the cleaning liquid in the front tank 111 is not 0 (step S13: No), the cleaner control unit 116 determines whether the remaining amount in the front tank 111 is equal to or less than the predetermined amount (step S14).

If the remaining amount of the cleaning liquid in the front tank 111 is greater than the predetermined amount (step S14: No), the cleaner control unit 116 operates the cleaners 101 to 109a and 109b in the first mode (step S15).For example, in a case where the remaining amount acquired in step S12 is 100 ml and the predetermined amount is 50 ml, the cleaner control unit 116 operates the cleaners 101 to 109a and 109b in the first mode (step S15) since the remaining amount is not equal to or less than the predetermined amount (step S14: No).

On the other hand, if the remaining amount of the cleaning liquid in the front tank 111 is equal to or less than the predetermined amount (step S14: Yes), the cleaner control unit 116 operates the cleaners 101 to 109a and 109b in the second mode (Step S16).For example, in a case where the remaining amount acquired in step S12 is 100 ml and the predetermined amount is 200 ml, the cleaner control unit 116 operates the cleaners 101 to 109a and 109b in the second mode (step S16) since the remaining amount of the cleaning liquid is equal to or less than the predetermined amount (step S14: Yes).

As described above, according to the vehicle cleaner system 100A of the present example, when the remaining amount in the tank is greater than the predetermined amount, the cleaner control unit 116 operates the cleaners 101 to 109a and 109b in the first mode, and when the remaining amount in the tank is equal to or less than the predetermined amount, the cleaner control unit 116 operates the cleaners 101 to 109a and 109b in the second mode in which the discharge amount of the cleaning liquid is less than that in the first mode. Therefore, in a case where the cleaning liquid in the tank is equal to or less than the predetermined amount, the discharge amount of the cleaning liquid can be reduced while continuing the cleaning of the external sensor 6. Accordingly, the cleaning liquid in the tank can be saved.

That is, if the external sensor 6 is not clean because the external sensor 6 cannot be cleaned due to insufficient remaining amount of the cleaning liquid, it is difficult to acquire external information having high reliability and thus it is difficult for the vehicle control unit 3 to execute the autonomous driving mode. Differently from the case of the vehicle cleaner system 100A according to the present example, with a cleaner system that is not provided with the first mode and the second mode and operates the cleaner with a constant discharge amount of the cleaning liquid, the user has to manually reduce the number of times of operation of the cleaners in order to reduce the cleaning liquid for the cleaners when it is desired to save the cleaning liquid of the cleaner, and has to refrain from executing the automatic cleaning mode in which the discharge amount cannot be adjusted. However, with such an adjustment, it is difficult to save the cleaning liquid while continuing the cleaning for keeping the external sensor clean.

In contrast, according to the vehicle cleaner system 100A of the present example, when the remaining amount of the cleaning liquid in the tank is greater than the predetermined amount, the cleaner control unit 116 operates the cleaners 101 to 109a and 109b in the first mode. When the remaining amount of the cleaning liquid in the tank is equal to or less than the predetermined amount, the cleaner control unit 116 operates the cleaners 101 to 109a and 109b in the second mode in which the discharge amount of the cleaning liquid is less than that in the first mode. Therefore, the remaining amount of the cleaning liquid can be saved while using the cleaning liquid for keeping the external sensor 6 clean.

Further, according to the vehicle cleaner system 100A of the present example, the predetermined amount as a criterion for determining the first mode and the second mode is determined based on at least one of the absolute amount of the cleaning liquid in the tank, the ratio of the remaining amount of the cleaning liquid to the full capacity of the tank, the number of times of operation of the cleaners 101 to 109a and 109b, the remaining time period the remaining cleaning liquid can sustain the cleaning which is specified based on consumption prediction of the cleaning liquid, and the remaining amount of the cleaning liquid possible to be used for a scheduled travel distance or scheduled travel time period. Therefore, the remaining amount in the tank can be appropriately specified, and the cleaners 101 to 109a and 109b can be operated in an appropriate mode from the first mode and the second mode.

Further, according to the vehicle cleaner system 100A of the present example, since the front tank remaining amount sensor 120 and the rear tank remaining amount sensor are provided which detect the remaining amount of the cleaning liquid in the tank, the remaining amount of the cleaning liquid in the front tank 111 or rear tank 113 can be directly detected and information on the remaining amount of the cleaning liquid can be acquired. It is possible to select an appropriate mode from the first mode and the second mode using the information on the remaining amount which is acquired as described above.

### <Various Modifications>

Although the embodiments of the present disclosure have been described above, it is needless to say that the technical scope of the present disclosure should not be limitedly interpreted by the description of the embodiments. It is to be understood by those skilled in the art that the present embodiments are merely examples and various modifications can be made within the scope of the invention described in the claims. The technical scope of the present invention should be determined based on the scope of the invention described in the claims.

Although the cleaner control unit 116 executes the automatic cleaning mode in each of the embodiments described above, the cleaner control unit 116 may execute the manual mode in which the cleaners 101 to 109a and 109b are operated manually.

In the embodiments described above, the sensor cleaners 103 to 106, 109a, and 109b that clean the LiDAR 6f, LiDAR 6b, LiDAR 6r, LiDAR 6l, the front camera 6c, and the rear camera 6d are described as cleaners that clean the external sensor 6, but the present disclosure is not limited thereto. The cleaner system 100 may include a cleaner or the like that cleans the radar, instead of the sensor cleaners 103 to 106, 109a, and 109b, or in addition to the sensor cleaners 103 to 106, 109a, and 109b.

The external sensor 6 such as the LiDAR 6f, LiDAR 6b, LiDAR 6r, and LiDAR 6l may include a detection surface and a cover that covers the detection surface. The cleaner that cleans the external sensor 6 may be configured to clean the detection surface, or may be configured to clean a cover that covers the sensor.

The cleaning liquid discharged by the cleaner system 100 includes water or a detergent. The cleaning mediums to be discharged to the front window 1f, the rear window 1b, the right headlamp 7r, the left headlamp 7l, the front LiDAR 6f, the rear LiDAR 6b, the right LiDAR 6r, the left LiDAR 6l, and the front camera 6c, and the rear camera 6d may be different or may be the same.

Although an example, in which the cleaners 101, 103, 105 to 109a are connected to the front tank 111 and the cleaners 102, 104, and 109b are connected to the rear tank 113, is described in the embodiments described above, the present disclosure is not limited thereto.

The cleaners 101 to 109a and 109b may be connected to a single tank. The cleaners 101 to 109a and 109b may be connected to tanks different from each other.

Alternatively, the cleaners 101 to 109a and 109b may be connected to a common tank for each type of an object to be cleaned thereof. For example, the front LC 103, the rear LC 104, the right LC 105, and the left LC 106 may be connected to a common first tank, and the right HC 107 and the left HC 108 may be connected to a second tank different from the first tank.

Alternatively, the cleaners 101 to 109a and 109b may be connected to a common tank for each arrangement position of the object to be cleaned thereof. For example, the front WW 101, the front LC 103, and the front camera cleaner 109a may be connected to a common front tank, the right LC 105 and the right HC 107 may be connected to a common right tank, the rear WW 102, the rear WW104, and the rear camera cleaner 109b may be connected to a common rear tank, and the left LC 106 and the left HC 108 may be connected to a common left tank.

In the embodiments described above, the cleaning medium is discharged from the cleaners 101 to 109a and 109b by operating actuators provided in the cleaners 101 to 109a and 109b, but the present disclosure is not limited thereto.

Each of the cleaners 101 to 109a and 109b is provided with a normally closed valve, and a pump is operated so that pressure between the tank and each of the cleaners 101 to 109a and 109b is always high. The cleaner control unit 116 may open the valves provided in the cleaners 101 to 109a and 109b to discharge the cleaning medium from the cleaners 101 to 109a and 109b. Alternatively, each of the cleaners 101 to 109a and 109b is connected to a separate pump, and the cleaner control unit 116 may separately control the pumps to control the discharge of the cleaning medium from the cleaners 101 to 109a and 109b. In this case, each of the cleaners 101 to 109a and 109b may be connected to different tanks, or may be connected to a common tank.

Nozzles of the cleaners 101 to 109a and 109b are provided with one or more discharge holes for discharging the cleaning medium. The nozzles of the cleaners 101 to 109a and 109b may be provided with one or more discharge holes for discharging the cleaning liquid and one or more discharge holes for discharging air.

The cleaners 101 to 109a and 109b may be provided separately, or the plurality of cleaners may be configured as a unit. For example, the right LC 105 and the right HC 107 may be configured as a single unit. In this case, for a mode in which the right head lamp 7r and the right LiDAR 6r are integrated, the right LC 105 and the right HC 107 may be configured as a single unit.

Further, a single electronic control unit may be configured to function as both the cleaner control unit 116 and the vehicle control unit 3.

Although the discharge amount in the first mode and the second mode has been described with the absolute amount (ml) in the above-described illustrative example, an operation mode in both the first mode and the second mode is not limited to the above example. For example, in a case where the discharge amount per second is constant, it may be set to discharge the cleaning liquid for three seconds in the first mode, and to discharge the cleaning liquid for one second in the second mode. Further, in a case where the discharge amount per time is constant, it may be set to discharge the cleaning liquid three times in the first mode, and to discharge the cleaning liquid one time in the second mode. The discharge amount in the first mode and the discharge amount in the second mode may be set to be different by a combination of at least two or more of the discharge amount (by ml or the like), the discharge time period (by seconds or the like), and the number of times of discharge (times). For example, the cleaning liquid may be discharged at a discharge amount per time of 2 ml for three times in the first mode and may be discharged at a discharge amount per time of 1 ml for one time in the second mode. In addition to the discharge of the cleaning liquid, air (cleaning medium) may be discharged in the first mode and the second mode. For example, in a case where discharge amounts of the cleaning liquid and air per second are constant, it may be set to discharge the cleaning liquid for three seconds and air for three seconds in the first mode, and to discharge the cleaning liquid for one second and air for one second in the second mode.

The second mode may be a mode in which the discharge amount of the cleaning liquid is less than that in the first mode, and may be a mode in which the cleaning liquid is not discharged. For example, in a case where discharge amounts of the cleaning liquid and air per second are constant, it may be set to discharge the cleaning liquid for one second and the air for one second in the first mode, and to discharge air for two seconds without discharging the cleaning liquid in the second mode.

Although two types of the first mode and the second mode have been described in the illustrative example, the operation mode for the mode is not limited to the above. For example, the cleaner control unit may operate the cleaners 101 to 109a and 109b in a plurality of modes, such as three modes including a third mode in which the cleaners 101 to 109a and 109b are operated with the remaining amount of the cleaning liquid being less than that in the above-described first mode and being greater than that in the above-described second mode.

Although an example, in which the first mode and the second mode are determined after the cleaner operation signal is acquired, is described in the illustrative example, a timing of acquiring the cleaner operation signal is not limited to that in the example described above. For example, the cleaner control unit 116 may acquire the cleaner operation signal after one of the first mode and the second mode is selected.

This application is based on Japanese Patent Application No. 2018-51234 filed on March 19, 2018 and Japanese Patent Application No. 2018-51235 filed on March 19, 2018.

## Claims

1. A vehicle cleaner system, comprising:
an external sensor (6) that acquires information on an outside of a vehicle (1);
a cleaner unit (110) including a cleaner (103, 104, 105, 107, 109a, 109b) which discharges a cleaning liquid to clean the external sensor (6);
a tank (111, 113) that stores the cleaning liquid; and
a cleaner control unit (116) that controls the cleaner unit (110),
**characterized in that** the cleaner control unit (116) is configured to determine that the remaining amount of the cleaning liquid will be insufficient in the near future and generate a remaining amount insufficiency prediction signal, and to output the remaining amount insufficiency prediction signal to a vehicle control unit (3), which controls traveling of the vehicle (1), when the cleaning liquid in the tank (111, 113) is equal to or less than a predetermined amount,
wherein the vehicle control unit (3) is configured to be capable of selectively executing an autonomous driving mode in which at least one of an accelerator control signal, a brake control signal, and a steering control signal is generated in accordance with an output of the external sensor, (6) and a manual driving mode in which the accelerator control signal, the brake control signal and the steering control signal are generated independently of the output of the external sensor (6), and
wherein the cleaner control unit (116) is configured to output the remaining amount insufficiency prediction signal to the vehicle control unit (3) and cause the vehicle control unit (3) to switch from the autonomous driving mode to the manual driving mode.

2. The vehicle cleaner system according to claim 1,
wherein the predetermined amount is determined based on at least one of an absolute amount of the cleaning liquid in the tank (111, 113), a ratio of the remaining amount of the cleaning liquid to a full capacity of the tank (111, 113), number of times of operation of the cleaner (103, 104, 105, 107, 109a, 109b), a remaining time period the remaining cleaning liquid is able to sustain the cleaning which is specified based on consumption prediction of the cleaning liquid, and a remaining amount of the cleaning liquid possible to be used for a scheduled travel distance or scheduled travel time period.

3. The vehicle cleaner system according to claim 1 or 2, further comprising:
a sensor (120) that detects a remaining amount of the cleaning liquid in the tank (111, 113).

## Patentansprüche

1. Fahrzeug-Reinigungssystem, das umfasst:
einen Außen-Sensor (6), der Informationen über eine Außenseite eines Fahrzeugs (1) erfasst;
eine Reinigungs-Einheit (110), die eine Reinigungseinrichtung (103, 104,105, 107, 109a, 109b) enthält, die eine Reinigungsflüssigkeit zum Reinigen des Außen-Sensors (6) ausgibt;
einen Tank (111, 113), der die Reinigungsflüssigkeit speichert; sowie eine Steuerungs-Einheit (116) der Reinigungseinrichtung, die die Reinigungs-Einheit (110) steuert,
**dadurch gekennzeichnet, dass** die Steuerungs-Einheit (116) der Reinigungseinrichtung so ausgeführt ist, dass sie feststellt, dass die Restmenge der Reinigungsflüssigkeit in der nahen Zukunft nicht mehr ausreicht, und sie ein Signal für Vorhersage von Restmengen-Knappheit erzeugt und das Signal für Vorhersage von Restmengen-Knappheit an eine Steuerungs-Einheit (3) des Fahrzeugs ausgibt, die Fahrt des Fahrzeugs (1) steuert, wenn die Reinigungsflüssigkeit in dem Tank (111, 113) weniger ist als oder genauso viel wie eine vorgegebene Menge,
wobei die Steuerungs-Einheit (3) des Fahrzeugs so ausgeführt ist, dass sie selektiv einen autonomen Fahrmodus, in dem ein Gaspedal-Steuerungssignal, ein Bremsen-Steuerungssignal oder/und ein Lenkungs-Steuerungssignal entsprechend einem Ausgang des Außen-Sensors (6) erzeugt wird, und einen manuellen Fahrmodus ausführen kann, in dem das Gaspedal-Steuerungssignal, das Bremsen-Steuerungssignal und das Lenkungs-Steuerungssignal unabhängig von dem Ausgang des Außen-Sensors (6) erzeugt werden, und
wobei die Steuerungs-Einheit (116) der Reinigungseinrichtung so ausgeführt ist, dass sie das Signal für Vorhersage von Restmengen-Knappheit an die Steuerungs-Einheit (3) des Fahrzeugs ausgibt und die Steuerungs-Einheit (3) des Fahrzeugs veranlasst, von dem autonomen Fahrmodus in dem manuellen Fahrmodus umzuschalten.

2. Fahrzeug-Reinigungssystem nach Anspruch 1,
wobei die vorgegebene Menge auf Basis einer absoluten Menge der Reinigungsflüssigkeit in dem Tank (111, 113), einem Verhältnis der verbleibenden Menge der Reinigungsflüssigkeit zu einem vollständigen Fassungsvermögen (111, 113) des Tanks, einer Häufigkeit von Betätigung der Reinigungseinrichtung (103, 104, 105, 107, 109a, 109b), einem verbleibenden Zeitraum, über den mit der verbleibenden Reinigungsflüssigkeit die Reinigung aufrechterhalten werden kann, der auf Basis von - Vorhersage des Verbrauchs der Reinigungsflüssigkeit bestimmt wird, sowie einer verbleibenden Menge der Reinigungsflüssigkeit bestimmt wird, deren Einsatz für eine geplante Fahrstrecke oder eine geplante Fahrzeit möglich ist.

3. Fahrzeug-Reinigungssystem nach Anspruch 1 oder 2, das des Weiteren umfasst:
einen Sensor (120), der eine verbleibende Menge der Reinigungsflüssigkeit in dem Tank (111, 113) erfasst.

## Revendications

1. Système de nettoyage de véhicule, comprenant :
un capteur externe (6) qui acquiert des informations sur l'extérieur d'un véhicule (1) ;
une unité de nettoyage (110) comprenant un nettoyeur (103, 104, 105, 107, 109a, 109b) qui évacue un liquide de nettoyage pour nettoyer le capteur externe (6) ;
un réservoir (111, 113) qui stocke le liquide de nettoyage ; et
une unité de commande de nettoyeur (116) qui commande l'unité de nettoyage (110),
**caractérisé en ce que** l'unité de commande de nettoyeur (116) est configurée pour déterminer que la quantité restante du liquide de nettoyage sera insuffisante dans un avenir proche et générer un signal de prédiction d'insuffisance de quantité restante, et pour délivrer en sortie le signal de prédiction d'insuffisance de quantité restante à une unité de commande de véhicule (3), qui commande le déplacement du véhicule (1), lorsque le liquide de nettoyage dans le réservoir (111, 113) est inférieur ou égal à une quantité prédéterminée,
dans lequel l'unité de commande de véhicule (3) est configurée pour être capable d'exécuter sélectivement un mode de conduite autonome dans lequel au moins l'un parmi un signal de commande d'accélérateur, un signal de commande de frein et un signal de commande de direction est généré conformément à une sortie du capteur externe (6) et un mode de conduite manuelle dans lequel le signal de commande d'accélérateur, le signal de commande de frein et le signal de commande de direction sont générés indépendamment de la sortie du capteur externe (6), et
dans lequel l'unité de commande de nettoyeur (116) est configurée pour délivrer en sortie le signal de prédiction d'insuffisance de quantité restante à l'unité de commande de véhicule (3) et amener l'unité de commande de véhicule (3) à passer du mode de conduite autonome au mode de conduite manuelle.

2. Système de nettoyage de véhicule selon la revendication 1,
dans lequel la quantité prédéterminée est déterminée sur la base d'au moins l'un parmi une quantité absolue du liquide de nettoyage dans le réservoir (111, 113), un rapport de la quantité restante du liquide de nettoyage sur une capacité totale du réservoir (111, 113), le nombre de fois où le nettoyeur (103, 104, 105, 107, 109a, 109b) a fonctionné, une période de temps restante pendant laquelle le liquide de nettoyage restant est capable de maintenir le nettoyage qui est spécifié sur la base d'une prédiction de consommation du liquide de nettoyage, et une quantité restante du liquide de nettoyage pouvant être utilisée pour une distance de déplacement programmée ou une période de temps de déplacement programmée.

3. Système de nettoyage de véhicule selon la revendication 1 ou 2, comprenant en outre :
un capteur (120) qui détecte une quantité restante du liquide de nettoyage dans le réservoir (111, 113).
